Europäisches Patentamt

(19) European Patent Office

Office européen des brevets

(11) EP 0 646 487 B1

## (12) EUROPEAN PATENT SPECIFICATION

(45) Date of publication and mention
of the grant of the patent:
**12.08.1998 Bulletin 1998/33**

(51) Int. Cl.⁶: **B60L 9/18**, H02P 7/74,
H02H 7/122

(21) Application number: **94850167.1**

(22) Date of filing: **29.09.1994**

(54) **Apparatus for compensation of a malfunctioning inverter**

Vorrichtung zur Kompensierung eines schadhaften Umrichters

Dispositif de la compensation d'un onduleur malfonctionnant

(84) Designated Contracting States:
**AT CH DE DK ES FR GB IT LI PT**

(30) Priority: **30.09.1993 SE 9303190**

(43) Date of publication of application:
**05.04.1995 Bulletin 1995/14**

(73) Proprietor: **ASEA BROWN BOVERI AB**
**721 83 Västeras (SE)**

(72) Inventors:
• **Buhrkall, Lars**
**S-72340 Västerås (SE)**
• **Sandberg, Lennart**
**S-72246 Västerås (SE)**

• **Frank, Kjell**
**S-72241 Västerås (SE)**

(74) Representative:
**Grennberg, Erik Bertil et al**
**Albihns Patentbyra Stockholm AB**
**P.O.Box 3137**
**103 62 Stockholm (SE)**

(56) References cited:
**EP-A- 0 284 869**

• **Patent Abstracts of Japan, vol. 17, no. 424(E-1410); & JP-A-0583948 (EAST JAPAN RAILWAY CO), 02-04-1993**

## Description

A method for compensating for the dropout or malfunctioning of an inverter in a system in which several inverters are connected in series to a source of direct current.

The invention relates to an inverter arrangement according to Claim 1. The invention is primarily intended for use for traction purposes in electrified railroads that are supplied with direct current, although the invention is not limited to this application and can be used in other applications.

As is known, inverters include controllable semiconductor components and find particular use in transmitting power between direct current systems and alternating current systems. For instance, when control is effected with the aid of a control system it is possible to generate from a direct current source a three-phase alternating current having practically any desired frequency. This is utilized in many electrified railroad systems with direct current supply and short-circuited alternating current motors, which can be given a starting torque, by initially supplying the motors at a low frequency (e.g. 2 Hz) and then subsequently supplying the motors at a higher frequency (e.g. up to 200 Hz).

Inverters can be constructed with series-connected valve elements (thyristors extinguishable thyristors, transistors), to a number of valves. Each element is only able to take-up a limited voltage drop, although very high voltages can be taken-up as a result of the series connection, as is the case with high-voltage direct current transmission. If a single valve element breaks down (short-circuits), a valve will still remain serviceable in many instances. The valve will become unserviceable, however, should too many valve elements break down. When a moderate direct-current voltage is applied and the valve contains only a few valve elements, the valve will become unserviceable after only a very few of the elements have short-circuited. When each valve is comprised of only one single valve element, for instance an extinguishable thyristor, it may require only one single element to fail in order to knock out a complete inverter.

Because the maximum voltage for semiconductor components constantly increases, this occurrence becomes more and more usual.

In many cases a total dropout of an inverter cannot be accepted. One example in this respect is found in railroad locomotives, where a redundancy is necessary for the locomotive to at least be able to crawl to the next station. One known method of achieving this involves coupling two inverters in series to the direct-current source, so as to obtain two separate alternating currents which can each be applied to a respective motor or to different windings on one and the same motor. Should one of the inverters drop out, that inverter is connected in parallel with a resistance which takes-up the drop in voltage that should have been taken up by the inverter that has dropped out. This ensures that the undamaged inverter will not be subjected to an excessively high direct-current voltage, although the power that should have been delivered to the inverter that has dropped out is instead lost as heat, with corresponding cooling problems. In Patent Abstracts of Japan, vol.17, No. 424, E-1410, abstract of JP-A-5-83948, the resistance is connected in series with a chopper, which is turned ON in response to the inverter failure.

A relevant case in railroad operations is that which occurs when alternating currents from inverters connected in series on the direct-current side are each allowed to supply a respective drive motor. One condition in this regard is that both inverters deliver the same power, since otherwise the input direct-current voltage would not distribute its voltage drop equally over the inverters. Admittedly, total symmetry is not necessary provided that no inverter obtains a direct-current voltage which exceeds the maximum allowed voltage.

However, in the case of traction, should the wheels driven by electric current from one of the inverters slip, the uptake of power will fall and therewith the voltage drop across the direct-current voltage input of the inverter. The other inverter will then obtain a correspondingly higher voltage, which is an obvious drawback.

It is an object of the present invention to eliminate these difficulties either fully or partially, and to provide a redundancy with the aid of relatively simple means without incurring extreme losses. This object, together with other objects made apparent in the following description, are achieved in accordance with an arrangement of the afore-defined kind having the characteristic features set forth in the characterizing clauses of Claim 1.

In the case of systems of the kind intended here, it is often usual when practicing known techniques to have a number of main inverters, for instance two, which each deliver an alternating current for main power, e.g. for motor operation. In addition, there is used an auxiliary system for delivering electrical power to other systems, for instance lighting systems, fans, compressors and air-conditioning systems, where it is desired to obtain more conventional alternating current frequencies (50 or 60 Hz). Also in this case, it is appropriate to divide the voltage of the DC source over several inverters each providing a respective multi-phase alternating current, and to connect these inverters to a respective transformer. There is then obtained two current sources, so that should one source malfunction, the other can be connected to supply all consumers. Also in this case it is necessary to replace an inverter that has dropped out with a resistor even in this case.

In accordance with the invention, there is provided a number of auxiliary inverters and $\underline{n}$ times this number of main inverters, where $\underline{n}$ is an integer greater than or equal to 1. When n = 1, two main inverters are connected in series to the direct-current source, while two auxiliary inverters may each be connected in series to the same direct-current source. However, there is nothing to prevent the number of main inverters being doubled for instance (n = 2), so as to obtain two pairs of main inverters with each pair being connected in series. In the case of a locomotive having four drive motors, it is then possible to supply a drive voltage to each of these motors.

The alternating current outputs of the auxiliary inverters are each connected to a primary winding array in a common transformer, the secondary windings of which supply the consumer of the auxiliary system. The whole of the direct current delivered by the direct-current source can then be allowed to pass through an auxiliary inverter should its corresponding main inverter drop out. The alternating current power generated therewith in the auxiliary inverter will be conducted to the aforesaid transformer and made available on the alternating current output to other auxiliary inverters, so that the power can be redelivered to the direct current side. With regard to the necessary hardware, it is obvious that the transformer and also the auxiliary inverters will preferably have the capacity to practice the invention . The extent to which this shall be effected will depend on how much power it is considered necessary to use in the emergency to be alleviated. (In this description, the direct-current connection of an inverter has been referred to as an input and the alternating current connection has been referred to as an alternating current output for the sake of convenience, although power can be transported between the direct-current side and the alternating-current side in both directions.)

Although the invention can be practiced with any selected number of main inverters and auxiliary inverters, these inverters will probably be two in number in the majority of cases. However, the principle is unchanged when the number is larger.

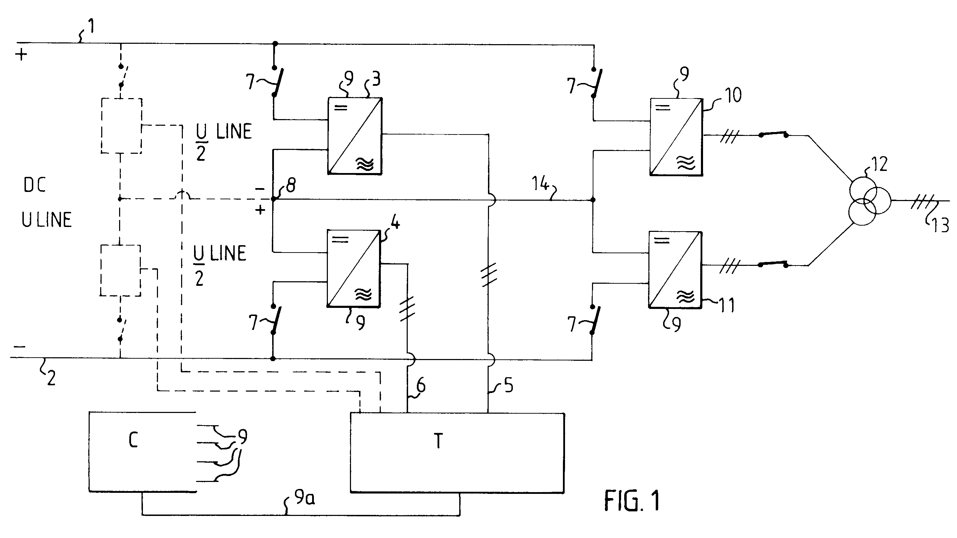

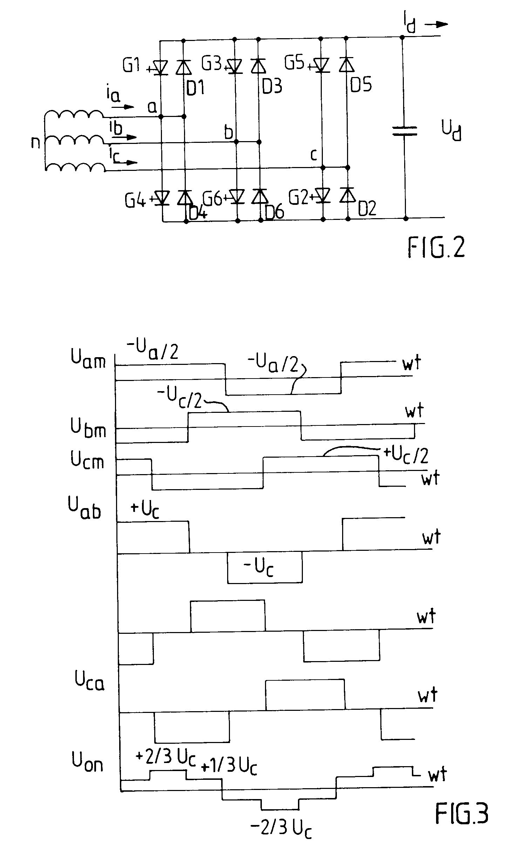

The invention will now be described in more detail with reference to a non-limiting embodiment and also with reference to the accompanying drawings. Figure 1 is a diagrammatic illustration of a system that has two main inverters and two additional inverters. Figure 2 illustrates an example of a known inverter that can be used when practicing the invention. Figure 3 illustrates an example of control-pulse activated voltages in an inverter according to Figure 2.

It is assumed in the following description that the manner in which inverters are constructed and controlled is well known to the person skilled in this art, in view of the existence of a wealth of literature on the subject. Reference is made in this regard to "Power Electronics" by Kjell Thorborg and to "High Power Electronics - HVDC and SVC" by Ake Ekström (Stockholm 1989), for instance, these works being included herewith by reference in the following description.

Figure 1 illustrates a system according to the principles of the invention, more specifically a system intended for railroad operations. A direct-current source 1, 2 delivers two three-phase alternating currents to a drive-motor arrangement T on lines 5 and 6 through the medium of two inverters 3, 4. The drive-motor arrangement T may include one or more drive motors. The inverters can be connected by means of disconnecting switches 7 and are controlled with pulses from a control unit C via lines 9, wherein the control unit can obtain speed signals from the drive unit T via a line 9a, particularly in the case of railroad vehicles, therewith enabling the frequency of the alternating current to be adapted to motor speed. As will be seen from the Figure, the direct-current voltage is divided equally between the two inverters 3 and 4. In principle, this will apply automatically provided that the inverters have mutually the same load on the alternating current sides.

Parallel with this array of main inverters intended for the drive motors T is an auxiliary power system which includes two further inverters 10, 11 which are also mutually connected in series to the same DC source 1, 2. According to the invention, the alternating current outputs of these inverters are each connected to a respective primary winding of a transformer 12, the secondary windings of which deliver three-phase current in lines 13 for general use, such as for lighting, fans, etc. These inverters can also be disconnected by disconnecting switches 7 and are controlled by the control unit (C) such as to obtain in principle a constant system frequency (50 or 60 Hz).

It is pointed out that the three-phase transformer is something special, since it is provided with three winding arrays, two three-phase "primary windings" and a three-phase secondary winding. The transformation ratio between the "primary windings" will preferably be 1:1, whereas the transformation ratios to the secondary windings are given by the desired service voltage. Thus, when the secondary windings deliver 300 kVA for instance in normal operation, each primary winding shall deliver 150 kVA.

In accordance with the invention, the junction points of the alternating current sides between respective pairs of inverters 3, 4 and 10, 11 are connected to a line 14. As a result, the division of the direct-current voltage $U_{Line}$ between the inverters 3 and 4 will be the same as that between the inverters 10 and 11.

In a typical case, the power output of the motor unit T is 3 MW, whereas the power output for the auxiliary power from the transformer 12 may be only 300 kW. However, if one of the alternating current lines, for instance the line 5, is subjected to a lower load than the other line (something which may happen with slipping), it is possible that the direct current through the inverter 3 will tend to decrease. According to the invention, this is compensated for by the inverter 10 drawing more current and therewith delivering more power to the transformer 12. This surplus power will primarily reduce the power outtake from the inverter 11, the direct current of which will decrease. The line 14 is therewith able to deliver surplus current corresponding to the difference between the direct currents through the inverters 10 and 11 to the point 8, and therewith enable the inverter 4 to obtain more direct current than that which passes through the inverter 3.

Should one of the main inverters, for instance the inverter 3, drop out completely and therefore needs to be isolated, the inverter is duly isolated although in a more pronounced fashion, such that the inverter 10 will deliver, through the transformer 12, a positive power to the inverter 11, the direct current of which is therewith directed to the input voltage, and hence the inverter 4 will be supplied with direct current from both inverters 10 and 11.

It is possible per se to construct all four inverters for maximum powers of equal magnitudes. When one of the main inverters 3 or 4 drops out, the redundancy power will then be maximum so that the remainder of the inverters can be driven at their own full power. However, this may be unnecessarily expensive when it is merely desired to move a train forwards at a slower speed. In the case of the above exemplified data for a full motor power of 3 MW and an auxiliary power of 300 kW, it may be suitable in the event of one of the main inverters dropping out to be satisfied with a quarter of the power, 750 kW, for motor operation and an unchanged outtake from the auxiliary power source 13. If it is assumed that the supply voltage is 3,000 V DC and the remaining main inverter is 4, the direct current through the inverter will be 500 A since a current of 350 A is delivered through the inverter 10 and through the inverter 11, which delivers current from the negative pole of the direct current source to the line 14, 150 A. Thus, the power taken up by the inverter 10 is divided on the output from the secondary side of the transformer and on a supply to the direct current side of the inverter 4. In the case of this example, assuming that the power factor cos $\varphi$ is 0.8, this means that the transformer will transform 375 kVA in normal operation, but will transform 656 kVA when performing under the thus dimensioned redundancy, corresponding to what is supplied from the supplying primary winding set-up. It is thus evident that when practicing the invention, there is required a particular type of transformer which is dimensioned for the purpose and the two primary windings of which are capable of withstanding more than three times the load in the case of redundancy.

It is clear that a corresponding redundancy effect will also occur should one of the inverters 10 and 11 drop out.

Figure 1 illustrates in broken lines two further main inverters which are connected pair-wise in series to the same direct current source. This modified embodiment may be appropriate for a locomotive having four motor-provided drive axles, each of which thus obtains driving power from a respective main inverter of the four main inverters provided. The advantages afforded by the invention will also be obtained in this case, as the skilled person will understand. An emergency traction power which is some percentage higher can then be obtained should one of the main inverters malfunction. As in the case of two main inverters, the voltage will be equalized between series-connected main inverters when the power outtake is uneven as a result of slipping, for instance.

It is necessary for the control from the control circuit C to take place in a suitable way, in order to achieve the aforesaid supply and inversion ratios. At present, it is preferred to use pulsewidth modulation in a voltage-rigid regime. With the aid of such modulation and with extinguishable valve elements (for instance GTO thyristors), it is possible to achieve an automatic transition between power transfer from the direct current side to the alternating current side, and power transfer in the opposite direction.

Since the principles by which such inverters are controlled are known and described in the literature, it is sufficient to exemplify this control with the aid of a circuit layout taken from the aforesaid monograph by Åke Ekström, from which Figures 2 and 3 are taken. The control is effected by so-called pulsewidth modulation. The control is effected such that at least one of the two thyristor valves connected to each phase will always be set to conduct the bridge current. Thus, in the case of the phase referenced a, either the valve G1 or the valve G4 will always be ignited or triggered. Since the diodes D1 and D4 are connected in parallel with the thyristors, either one of the thyristors or one of the diodes will always conduct current. In the simplest case, square-wave modulation, the voltages occurring on the alternating current connections $U_{am}$, $U_{bm}$, $U_{cm}$ (where m is an imaginary centre point between the direct current poles) will have the wave shapes shown in Figure 3. The phase voltage to the neutral point is shown by the lowermost curve in Figure 3.

More complicated pulse modulations are known, which give less harmonics contents. In the case of such more complicated pulse modulations, which are used at relatively low levels with the fundamental harmonic of the alternating-current voltage, a switch is made relatively more often between the two valves in one phase. This method is known generally as pulsewidth modulation.

**Claims**

1. An inverter arrangement having a direct-current input (1, 2) and at least two alternating-current outputs (5, 6), each being supplied from a respective main inverter (3, 4) which are connected in series to the direct current input, wherein the alternating current outputs of said inverters are connected to at least one motor (T), and an inverter control unit (C), **characterized** in that each said main inverter (3, 4) is connected in parallel with an auxiliary inverter (10, 11); in that the alternating current outputs of the auxiliary inverters are connected to a common transformer (12), wherein the transformer is constructed to transfer alternating current power from one of the auxiliary inverters, whose corresponding parallel-connected main inverter is out of operation, to at least one other auxiliary inverter; and in that the control unit (C) is adapted to control at least the auxiliary inverters by means of pulsewidth modulation in a four quadrant operation, enabling electric power to be delivered from an auxiliary inverter, whose corresponding parallel-connected main inverter is out of operation, via the transformer and via the alternating current output of at least one other auxiliary inverter to the direct current input of this latter inverter.

2. An arrangement according to Claim 1, **characterized** in that the main inverters are two in number.

3. An arrangement according to Claim 1 or 2, **characterized** in that all inverters are voltage rigid.

4. An arrangement according to any one of Claims 1-3, **characterized** in that a speed sensing signal (9a) is applied from said at least one motor to the inverter control unit (C) so as to adjust the main inverter to a speed-dependent frequency.

5. An arrangement according to any of claims 1-4, **characterized** in that disconnecting switches (7)are arranged for disconnecting or isolating each of said main inventers (3, 4)in case of its failure.

**Patentansprüche**

1. Wechselrichter-Anordnung mit einem Gleichstromeingang (1,2) und mindestens zwei Wechselstromausgängen (5,6), von denen jeder von einen zugehörigen Hauptwechselrichter (3,4) gespeist wird, die in Reihe an den Gleichstromeingang geschaltet sind, wobei die Wechselstromausgänge der genannten Wechselrichter an mindestens einen Motor (T) angeschlossen sind, und mit einer Wechselrichter-Steuereinheit (C), **dadurch gekennzeichnet**, daß zu jedem Hauptwechselrichter (3,4) ein Hilfswechselrichter (10,11) parallel geschaltet ist, daß die Wechselstromausgänge der Hilfswechselrichter an einen gemeinsamen Transformator (12) angeschlossen sind, wobei der Transformator so beschaffen ist, daß er Wechselstromleistung von einem der Hilfswechselrichter, dessen zugehöriger, parallel geschalteter Hauptwechselrichter außer Betrieb ist, zu mindestens einem anderen Hilfswechselrichter übertragen kann, und daß die Steuereinheit (C) so beschaffen ist, daß sie mindestens die Hilfswechselrichter durch Pulsbreitenmodulation in einem vier Quadrantenbetrieb zu betreiben vermag, wodurch ermöglicht wird, daß elektrische Energie von einem Hilfswechselrichter, dessen zugehöriger, parallel geschalteter Hauptwechselrichter außer Betrieb ist, über den Transformator und über den Wechselstromausgang mindestens eines anderen Hilfswechselrichters auf den Gleichstromeingang des letztgenannten Wechselrichters übertragen werden kann.

2. Anordnung nach Anspruch 1, **dadurch gekennzeichnet**, daß die Anzahl der Hauptwechselrichter zwei beträgt.

3. Anordnung nach Anspruch 1 oder 2, **dadurch gekennzeichnet**, daß alle Wechselrichter spannungssteif sind.

4. Anordnung nach einem der Ansprüche 1 bis 3, **dadurch gekennzeichnet**, daß ein Geschwindigkeitsmeßsignal (9a) von dem genannten mindestens einen Motor der Wechselrichter-Steuereinheit (C) in der Weise zugeführt wird, daß der Hauptwechselrichter auf eine geschwindigkeitsabhängige Frequenz eingestellt wird.

5. Anordnung nach einem der Ansprüche 1 bis 4, **dadurch gekennzeichnet**, daß Trennschalter (7) vorhanden sind zur Abschaltung oder Isolierung jedes der genannten Hauptwechselrichter (3,4) im Falle seines Versagens.

**Revendications**

1. Dispositif onduleur ayant une entrée (1, 2) à courant continu et au moins deux sorties (5, 6) de courant alternatif, chacune d'elles étant alimentée par un onduleur (3, 4) principal respectif, ceux-ci étant connectés en série à l'entrée à courant continu, dans lequel les sorties à courant alternatif des onduleurs sont connectées à au moins un moteur (T), et par une unité (C) de commande d'onduleur, caractérisé en ce que chacun des onduleurs (3, 4) principaux est connecté en parallèle à un onduleur (10, 11) auxiliaire ; en ce que les sorties à courant alternatif des onduleurs auxiliaires sont connectées à un transformateur (12) commun, dans lequel le transformateur est réalisé de façon à transférer une puissance à courant alternatif à partie de l'un des onduleurs auxiliaires, dont l'onduleur principal connecté en parallèle correspondant est hors service, à au moins un autre onduleur auxiliaire ; et en ce que l'unité (C) de commande est adaptée pour commander au moins les onduleurs auxiliaires au moyen d'une modulation d'impulsion en largeur selon une opération à quatre quadrants, ce qui permet de délivrer une puissance électrique à partir d'un onduleur auxiliaire dont l'onduleur principal connecté en parallèle correspondant est hors service, par l'intermédiaire du transformateur et par l'intermédiaire de la sortie à courant alternatif d'au moins un autre onduleur auxiliaire, à l'entrée à courant continu de ce dernier onduleur.

2. Dispositif suivant la revendication 1, caractérisé en ce que les onduleurs principaux sont au nombre de deux.

3. Dispositif suivant la revendication 1 ou 2, caractérisé en ce que tous les onduleurs sont rigides en tension.

4. Dispositif suivant l'une quelconque des revendications 1 à 3, caractérisé en ce qu'un signal (9a) de détection de vitesse est appliqué à partir de cet au moins un moteur à l'unité (C) de commande d'onduleur de façon à ajuster l'onduleur principal à une fréquence dépendant de la vitesse.

5. Dispositif suivant l'une quelconque des revendications 1 à 4, caractérisé en ce que des commutateurs (7) de déconnexion sont prévus pour déconnecter ou isoler chaque onduleur (3, 4) principal en cas de défaut de fonctionnement de celui-ci.

FIG. 1

EP 0 646 487 B1

EP 0 646 487 B1

FIG.2

FIG.3

8